Europäisches Patentamt

European Patent Office

Office européen des brevets

(19)

(11) **EP 0 815 479 B1**

(12) **EUROPÄISCHE PATENTSCHRIFT**

(45) Veröffentlichungstag und Bekanntmachung des Hinweises auf die Patenterteilung:
**25.08.1999** **Patentblatt 1999/34**

(21) Anmeldenummer: **96905694.4**

(22) Anmeldetag: **07.03.1996**

(51) Int Cl.[6]: **G02B 6/42**

(86) Internationale Anmeldenummer:
**PCT/DE96/00409**

(87) Internationale Veröffentlichungsnummer:
**WO 96/29622 (26.09.1996 Gazette 1996/43)**

(54) **OPTISCHE SENDE- UND EMPFANGSANORDNUNG**

OPTICAL TRANSCEIVER

EMETTEUR-RECEPTEUR OPTIQUE

(84) Benannte Vertragsstaaten:
**DE FR GB IT SE**

(30) Priorität: **23.03.1995 DE 19510559**

(43) Veröffentlichungstag der Anmeldung:
**07.01.1998 Patentblatt 1998/02**

(73) Patentinhaber: **ROBERT BOSCH GMBH**
**70442 Stuttgart (DE)**

(72) Erfinder:
• **HAUER, Heiner**
**D-70734 Fellbach (DE)**
• **KUKE, Albrecht**
**D-71549 Auenwald (DE)**
• **SCHWADERER, Bernhard**
**D-71554 Weissach im Tal (DE)**

(56) Entgegenhaltungen:
| | |
|---|---|
| EP-A- 0 366 974 | EP-A- 0 498 169 |
| WO-A-85/03179 | DE-C- 3 914 835 |
| DE-C- 4 301 456 | GB-A- 2 162 335 |

• **PATENT ABSTRACTS OF JAPAN vol. 008, no. 248 (P-313), 14. November 1984 & JP,A,59 121008 (TOUKIYOU KOGYO DAIGAKU), 12. Juli 1984,**

## Beschreibung

Stand der Technik

Die Erfindung betrifft eine optische Sende- und Empfangsanordnung mit folgenden Komponenten: einem Lichtwellenleiter, einem Sender, einem Empfänger und einer Koppeloptik zwischen Sender und Lichtwellenleiter, wobei die einzelnen Komponenten auf Trägern fixiert sind, die Reflexionsflächen aufweisen und die durch anisotropes Ätzen hergestellte V-Nuten und Vertiefungen aufweisen, in denen die einzelnen Komponenten fixiert sind.

Optische Sende- und Empfangsanordnungen sind zum Senden und Empfangen von Lichtsignalen der optischen Nachrichtentechnik geeignet. Dabei können die Sende- und Empfangssignale entweder die gleiche Wellenlänge oder verschiedene Wellenlängen haben. Zur Richtungstrennung der Strahlen dient im ersten Fall eine für beide Signale teildurchlässige Spiegelschicht und im zweiten Fall eine Filterschicht, die eine Wellenlänge durchläßt und die andere reflektiert.

Nach dem Stand der Technik gibt es eine Reihe von Vorschlägen für solche optische Sende- und Empfanganordnungen mit Trennung der Sende- und Empfangsrichtung über Filterschichten oder teildurchlässige Spiegel. Wegen der richtungsmäßigen Trennung der drei Lichtpfade zum Übertragungslichtwellenleiter, zum Sender und zum Empfänger sind bei den bekannten Vorschlägen für die Montage der elektrooptischen Komponenten, der Halterung für den Übertragungslichtwellenleiter und der zur Strahlformung und Stahl führung benötigten optischen Komponenten unterschiedliche Träger erforderlich, die mit hoher Präzision zueinander ausgerichtet werden müssen.

Aus der US 5,392,368 A ist es bekannt, bei einem optoelektronischen Element einen faserförmigen Lichtwellenleiter senkrecht zur Oberfläche eines Trägers zu führen, wobei reflektierende Flächen zur Anwendung gelangen.

Aus der gattungsbildenden DE 39 14 835 C1 ist eine Anordnung zur Ankopplung eines Lichtwellenleiters an ein optisches Sende- oder Empfangselement bekannt, bei dem eine Justierung in der zur optischen Achse lateralen Ebene dadurch erreicht wird, daß Lichtwellenleiter und optisches Sende- oder Empfangselement auf verschiedenen Trägern fixiert sind, die mit ihren Trägeroberflächen verschiebbar aufeinander liegen. Bei der Anwendung einer solchen Anordnung als optisches Sende- und Empfangselement sind Sender und Empfänger ebenfalls auf verschiedenen Trägern angeordnet. Dies führt dazu, daß in zwei unterschiedlichen Trägern V-Nuten mit hoher Präzision hergestellt werden müssen und die elektrooptischen Komponenten mit hoher Präzision befestigt werden müssen.

Es ist Aufgabe der Erfindung, eine optische Sende- und Empfangsanordnung anzugeben, durch die der Aufbau einer solchen Anordnung erleichtert ist. Eine Anordnung, die die angegebene Aufgabe löst, ist im Patentanspruch 1 angegeben. Vorteilhafte Weiterbildungen sind den Unteransprüche zu entnehmen.

Eine Erleichterung des Aufbaus läßt sich durch die planare Montage der optoelektronischen Bausteine und durch eine möglichst weitgehende Zusammenfassung der optischen Komponenten zur Strahlführung und -formung auf einem gemeinsamen Träger erreichen. Es ist besonders kostensparend und daher von Vorteil, wenn auch die Monitordiode auf dem gemeinsamen Träger montiert wird. Ein Ausführungsbeispiel der Erfindung wird anhand der Figuren beschrieben. Es zeigen:

Figur 1 einen Querschnitt durch einen optischen Transceiver,
Figur 2 die Anordnung eines optischen Transceivers in einem Koaxialgehäuse,
Figur 3 einen zweiten Träger mit einer hohlspiegelartig ausgeformten Reflexionsfläche und
Figur 4 einen Ausschnitt aus einem ersten Träger mit einer hohlspiegelartig ausgeformten Reflexionsfläche.

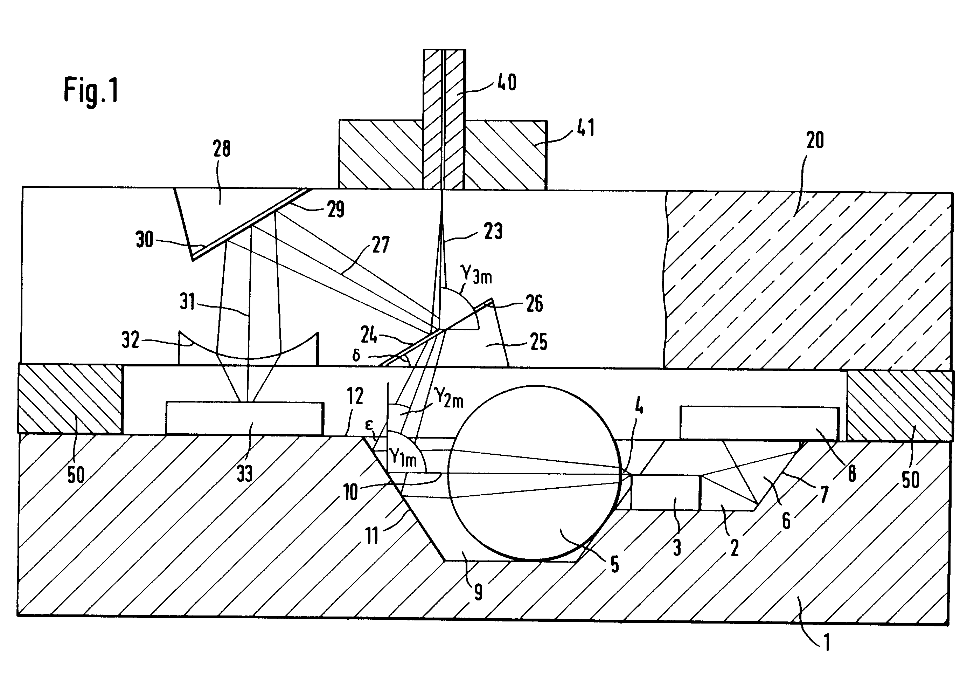

In Figur 1 ist ein Siliziumträger 1 dargestellt, der eine Vertiefung 2 mit flachem Boden aufweist, die durch anisotropes Ätzen hergestellt ist. Auf dem Boden dieser Vertiefung ist ein Sender, eine Laserdiode 3, montiert. Das aus dem vorderen Spiegel der Laserdiode austretende divergente Lichtbündel 4 wird von einer Linse 5, die sich ebenfalls in einer Vertiefung 9 im Siliziumträger 1 befindet, in ein konvergentes Bündel 10 umgewandelt. Das aus dem hinteren Spiegel der Laserdiode austretende Lichtbündel 6 trifft nach Reflexion an der hinteren geneigten Seitenwand 7 der Vertiefung 2 auf eine über der Vertiefung 2 montierte Monitordiode 8, die zur Regelung der Laserleistung dient. Die Linse 5 kann vorteilhafterweise eine Kugellinse sein, die mit einer sehr hohen Präzision bezüglich ihrer Durchmesser- und Formtoleranz und bei Verwendung eines standardisierten optischen Glases mit einer genau spezifizierten Brechzahl zu sehr geringen Kosten hergestellt werden kann. Die Linse 5 ist in der Vertiefung 9 gehalten und fixiert. Das aus der Linse austretende leicht konvergente Bündel 10 trifft auf die Stirnseite 11 der Vertiefung 9 und wird schräg nach oben reflektiert. Wenn die Vertiefung 9 durch einen anisotropen Ätzprozeß in einem (100)-orientierten Siliziumträger hergestellt worden ist, so hat die Stirnfläche 11 gegenüber der Trägeroberfläche 12 einen Neigungswinkel von $\alpha = \arctan(\sqrt{2}) = 54{,}7°$.

Der Mittelstrahl des Bündels 10, der unter einem Richtungswinkel von $\gamma_{1m} = 90°$ gegen die Normalenrichtung der Trägeroberfläche auf die Seitenfläche 11 auftritt, wird dann unter einem Richtungswinkel von

$$\gamma_{2m} = 2^*\alpha - 90° = 19{,}5°$$

gegenüber der Trägernormalen reflektiert.

Eine vorteilhafte Montageart besteht darin, daß der Träger für die optoelektronischen Bauelemente auf dem Sockel eines koaxialsymmetrischen Gehäuses, z.B. eines TO-Gehäuses, montiert wird und die Faser senkrecht zum Sockel vor dem Fenster auf der Stirnseite des Gehäuses in einem Flansch geführt und justiert wird. Bei dieser Montageart muß der nach oben reflektierte Laserstrahl in Richtung der Flächennormalen des Gehäusesockels bzw. des Siliziumträgers verlaufen, um in die senkrecht zum Gehäusesockel geführte Faser eingekoppelt werden zu können. Zur Vermeidung von Rückreflexionen von der Faserstirnfläche über die Koppeloptik zurück in den Laser werden nach dem Stand der Technik schräg geschnittene Fasern eingesetzt. Üblich ist ein Faserschnittwinkel von 8°. Bei einem Brechungsindex des Faserkerns von $n_f = 1,46$ muß die Faser dann unter einem Winkel von 3,6° gegenüber dem Mittelstahl des einfallenden Lichtbündels geneigt sein. Um den an der Reflexionsfläche 11 reflektierten Laserstrahl von einer Richtung $\gamma_{2m} = 19,5°$ in die für die Fasereinkopplung erforderliche Richtung von 0° bei senkrecht geschnittener Faser bzw. von +3,6° oder -3,6° bei schräggeschnittener Faser umzulenken, wird erfindungsgemäß ein zweiter Körper 20 über dem Träger 1 angebracht. Der Körper 20 besteht aus einem für die Sende- und Empfangslichtwellenlängen transparenten Material und hat eine Unterseite 21 und eine Oberseite 22, die beide parallel zur Oberseite 12 des Trägers 1 liegen. Die Unterseite 21 des Körpers 20 liegt dabei so weit über der Oberseite 12 des Trägers 1, daß die auf dem Träger 1 montierten optischen und optoelektronischen Komponenten genügend Platz haben. Der erforderliche Abstand kann z.B. dabei durch Abstandshalter 50 eingestellt werden. Statt dessen ist es auch möglich, die Flächen 12 und 21 direkt aufeinander aufliegen zu lassen und an den Stellen, an denen auf dem Träger 1 montierte Komponenten über dessen Oberfläche ragen, im Körper 20 Ausnehmungen vorzusehen oder die Komponenten in Vertiefungen des Trägers 1 versenkt zu montieren.

Die Umlenkung des Strahlbündels von der Richtung $\gamma_{2m} = 19,5°$ in die für die Einkopplung in eine senkrecht geführte Faser erforderliche Richtung von $\gamma_{3m} = 0°$, -3,6° bzw. +3,6° erfolgt durch Lichtbrechung an der schräg liegenden Grundfläche 24 einer keilförmigen Vertiefung 25 in der Unterseite des transparenten Körpers 20. Der hierbei erforderliche Keilwinkel $\delta$ der brechenden Fläche 24 errechnet sich aus dem Eingangswinkel $\gamma_{2m}$, dem Ausgangswinkel $\gamma_{3m}$ und dem Brechungsindex n des Körpers 20 aus der transzendenten Gleichung

$$\sin(\gamma_{2m}+\delta)-n*\sin(\arcsin(1/n*(\sin(\gamma_{3m}))+\delta) = 0.$$

Durch Iteration erhält man mit n = 1,5 und $\gamma_{2m} = 19,5°$ für

$\gamma_{3m} = -3,6°$
$\gamma_{3m} = 0°$
$\gamma_{3m} = +3,6°$
$\delta = 35,5°$
$\delta = 30,9°$
$\delta = 26,0°,$

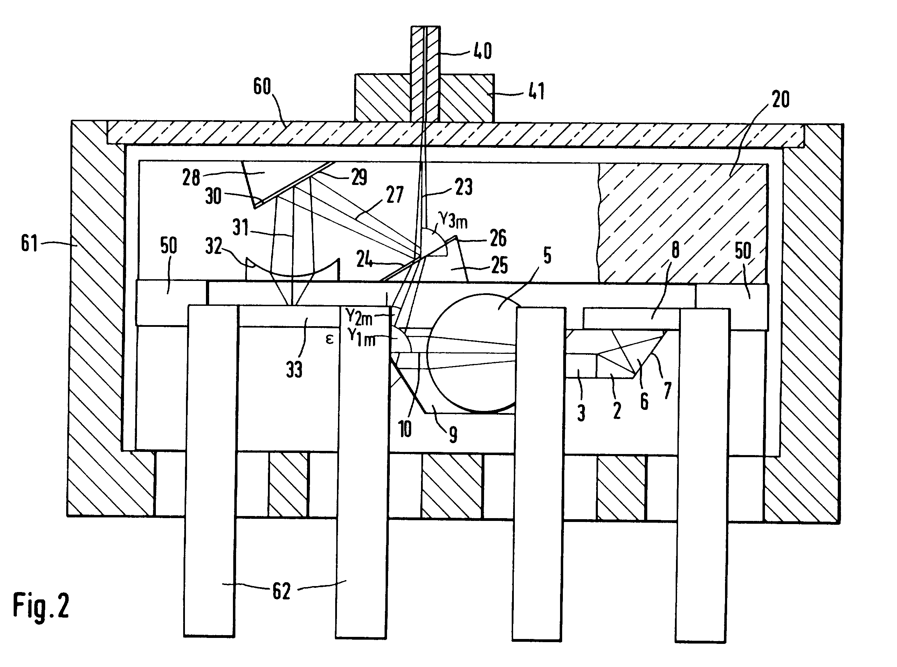

Auf der Oberseite 22 des Körpers 20 trifft der Strahl auf die Faser 40, die in einem Flansch 41 geführt und mit diesem Flansch lateral justiert und fixiert werden kann. Ebenso ist es möglich, daß zwischen der Oberfläche 22 des Körpers 20 und der Faser mit dem Faserflansch noch ein Fenster 60 angebracht wird, welches ein Koaxialgehäuse 61 zur Aufnahme des Trägers 1 und des transparenten Körpers 20 hermetisch dicht abschließt (siehe Figur 2). In diesem Fall muß die Bildweite der Abbildung durch die Linse 5 entsprechend verlängert werden.

Der Strahl 23 des Empfangslichtbündels tritt aus der Faser mit einem Öffnungswinkel $\delta$ aus, der sich bei der Einmodenfaser aus der Gleichung

$$\tan\theta = \lambda/(n*\pi W_O)$$

errechnet, wobei n der Brechungsindex des Ausbreitungsmediums, hier der transparente Körper 20, und $W_O$ der Taillenradius des aus der Einmodenfaser austretenden Gaußstrahls ist. Für eine Standardeinmodenfaser ist $W_O = 5\mu m$ mit n = 1,5 und $\lambda = 1,55\mu m$ errechnet sich ein Öffnungswinkel $\theta$, bei dem die Lichtintensität auf den Faktor $1/e^2$ der Mittenintensität abgefallen ist, zu 3,8°. Das Empfangslichtbündel trifft auf die Grenzfläche 24 der Vertiefung 25. Zur Richtungstrennung des Sende- und Empfangsstrahls ist diese Grenzfläche mit einem Filter 26 beschichtet, das das Empfangslicht reflektiert und das Sendelicht durchläßt. Je nach Einsatzbedingungen kann dieses Filter bei verschiedenen Wellenlängen von Sende- und Empfangslicht wellenlängenselektiv oder bei der gleichen Wellenlänge teildurchlässig sein.

Nach Reflexion an der Grenzfläche 24 mit der Filterschicht 26 wird das Empfangslichtbündel in seinem Strahlverlauf 27 schräg nach oben im Innern des Körpers 20 abgelenkt. Auf der Oberseite 22 des Körpers 20 ist eine Vertiefung 28 eingelassen, deren Grundfläche 29 mit einer Reflexionsschicht 30 verspiegelt ist. Die Grundfläche 29 der Vertiefung 28 ist im wesentlichen parallel zur Grundfläche 24 der Vertiefung 25. Deshalb verläuft der an der Fläche 29 reflektiert Empfangsstrahl im Verlauf 31 im wesentlichen parallel zum Strahlverlauf 23.

Da sich der Empfangsstrahl im Innern des Körpers 20 unter dem Winkel $\theta$ öffnet, nimmt sein Durchmesser immer mehr zu, so daß kleinflächige Empfangsdioden nur mit einem geringen Koppelwirkungsgrad angekoppelt werden können. Um dies zu verhindern und um auch sehr kleinflächige Photodioden, die für hohe Frequenzbereiche erforderlich sind, verlustarm anzukoppeln, wird auf der Unterseite 21 des Körpers 20 im Bereich des Strahlaustritts eine Sammellinse 32 vorgesehen. Diese Sammellinse kann vorteilhafterweise durch Trockenätzen direkt aus dem Körper 20 hergestellt werden. Ebenso ist es möglich, die Linse 40 durch einen Prägeprozeß vorteilhafterweise zusammen mit den ebenfalls geprägten Vertiefungen 25 und 28 herzustellen. Auch andere Linsenarten wie holographische Linsen, Fresnellinsen oder separate mikrooptische Linsen sind hier einsetzbar.

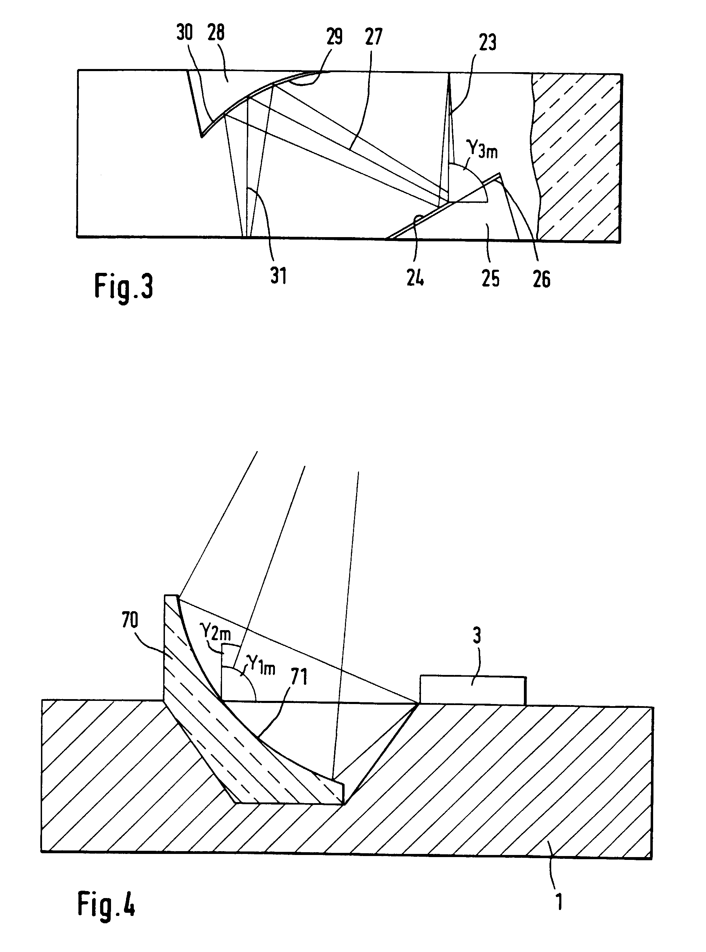

Die Bündelung des Empfangsstrahls kann statt durch die Linse 32 auch durch eine hohlspiegelartige Form der Reflexionsfläche 29 erreicht werden, wie in der Figur 3 gezeigt ist.

Nach Bündelung durch die Linse 32 oder durch die hohlspiegelartige Reflexionsfläche 29 trifft der Empfangsstrahl auf die aktive Fläche der Empfangs-Photodiode 33, die auf der Oberseite 12 des Trägers 1 montiert ist. Durch die Art der erfindungsgemäßen Strahlführung hängt der Abstand des Lichtauftrittspunkts des Empfangsstrahls auf der Photodiode von der geätzten Reflexionsfläche 11 im Siliziumträger nicht von der lateralen Position des Trägers 20 ab. Dieser Abstand hängt nur von der Höhe des Lichtauftreffpunktes auf der Fläche 11 und damit von der Höhe des Lasers ab. Die Position der Photodiode kann daher durch Markierungen auf der Oberfläche 12 des Trägers 1 festgelegt werden. Wenn diese Markierungen im gleichen Ätzprozeß wie die Vertiefung 9 hergestellt werden, so läßt sich eine hochgenaue Positionierung der Photodiode relativ zur Vertiefung 9 erreichen.

Der transparente Körper 20 kann vorteilhafterweise aus einem prägbaren oder abformbaren Material bestehen. Dies ist besonders dann vorteilhaft, wenn in dem Präge- oder Abformprozeß gekrümmte Flächen zur Strahlformung hergestellt werden sollen. Bei planen Reflexionsflächen 24 und 29 kann auch Silizium als Trägermaterial verwendet werden. Bei anisotropem Ätzen in (100)-orientiertem Silizium haben geätzte Vertiefungen einen Böschungswinkel von $\alpha = 54{,}7°$. Da die hier benötigten Vertiefungen 25 und 28 aber einen Böschungswinkel haben müssen, der sich aus Gl.(3) für $\gamma_{2m} = 19{,}5°$, $\gamma_{2m} = 0°$ und dem Brechungsindex für Silizium von $n = 3{,}4777$ zu $\delta_{si} = 7{,}5°$ errechnet, wird für den transparenten Körper 20 erfindungsgemäß ein einkristalliner Siliziumwafer verwendet, dessen Oberflächen in einem Winkel von

$$\epsilon = \alpha - \delta_{si} = 54{,}7° - 7{,}5° = 47{,}2°$$

gegen die (100)-Kristallebene aus der Siliziumbirne geschnitten ist, wobei eine <100>-Richtung die Spur zwischen der Waferoberfläche und der (100)-Kristallebene bildet. Bei einem solchen Wafer hat eine anisotrop geätzte (111)-Begrenzungsfläche einer Vertiefung den gewünschten Böschungswinkel von 7,5°. In Silizium ist wegen seines größeren Brechungsindexes der aus Gl. (5) berechnete Strahlöffnungswinkel $\theta_{si}$ nur 1,6° gegenüber 3,8° bei $n = 1{,}5$. Deshalb ist die Strahlaufweitung hier wesentlich geringer, so daß eventuell auf eine Bündelung des Empfangsstrahls verzichtet werden kann.

Wie oben aufgeführt, ist für die Strahlformung des Sendestrahls eine Kugellinse 5 vorgesehen. Eine solche Kugellinse hat zwar den Vorteil, daß sie mit sehr hoher Präzision hergestellt werden kann. Ihr Nachteil ist aber, daß sie eine große sphärische Aberration aufweist und dadurch den Koppelwirkungsgrad zwischen Laser und Faser beeinträchtigt. Die erfindungsgemäße Lösung bietet die Möglichkeit, die durch die sphärische Aberration bedingten Wellenfrontverzerrungen des Sendestrahls zu korrigieren. Hierzu wird auf der Strahlaustrittsstelle auf der Oberseite 22 des Trägers 20 eine Korrekturlinse angebracht, die im gleichen Präge- oder Abformprozeß erzeugt werden kann, bei welchem die Vertiefungen 25 und 28 und die Linse 32 hergestellt werden.

Die Strahlformung mit der Linse 5 und die Strahlumlenkung an der Reflexionsfläche 11 kann in einem weiteren erfindungsgemäßen Ausführungsbeispiel zusammengefaßt werden, indem das in Figur 4 gezeigte Reflexionselement 70 eingesetzt wird. Dieses Reflexionselement hat eine hohlspiegelartig geformte Spiegelfläche 71, deren Normale im Lichtauftreffpunkt des Mittelstrahls des Sendelichtbündels im Bereich 10 einen Winkel $\beta$ zur Einstrahlrichtung aufweist. Hat dieser Winkel eine Größe von

$$\beta = 90° - \alpha = 90° - 54{,}7° = 35{,}3°$$

so ist der weitere Strahlverlauf wie oben beschrieben. Es sind hier aber auch andere Werte für $\beta$ möglich, so daß der Strahlverlauf auch variiert werden kann. Der Hohlspiegel 71 im Reflexionselement 70 kann so geformt werden, daß die üblicherweise vorhandene Elliptizität des Laserstrahls in eine zirkulare Strahl symmetrie umgewandelt werden kann, die der Fasersymmetrie angepaßt ist. Dies führt insbesondere bei Laser mit einer stark elliptischen Feldverteilung zu einer erheblichen Verbesserung des Koppelwirkungsgrades. Wie Koppelrechnungen für gaußsche Strahlen zeigen, können insbesondere für Hochleistungslaser mit einem Achsenverhältnis der Strahlellipse von 3:1 auch bei optimal angepaßter Vergrößerung nur ein Koppelwirkungsgrad von maximal 70% erreichen. Bei einer Umformung in einen zirkularsymmetrischen Strahl ist dagegen eine 100%ige Strahlanpassung möglich.

Der Reflexionskörper 70 läßt sich ebenso wie der Körper 20 durch Abformen oder Prägen herstellen. Die Transparenz des Materials spielt hier keine Rolle.

**Patentansprüche**

1. Optische Sende- und Empfangsanordnung mit folgenden Komponenten:
   einem Lichtwellenleiter (40), einem Sender (3), einem Empfänger (33) und einer Koppeloptik (5) zwischen Sender und Lichtwellenleiter, wobei die einzelnen Komponenten auf Trägern (1,20) fixiert sind, die Reflexionsflächen (11, 24, 29) aufweisen und die durch anisotropes Ätzen hergestellte V-Nuten und Vertiefungen aufweisen, in denen die einzelnen Komponenten fixiert sind, dadurch gekennzeichnet, daß Sender (3), Empfänger (33) und eine Monitordiode (8) auf einer Fläche eines ersten, im wesentlichen plattenförmigen Trägers (1) montiert sind, daß der Lichtwellenleiter (40) zu dieser Fläche des Trägers (1) senkrecht angeordnet ist, daß zwischen dem Lichtwellenleiter (40) und der Fläche des ersten Trägers (1) ein weiterer, im wesentlichen plattenförmigen Träger (20) angeordnet ist, der für Licht der Übertragungswellenlänge durchlässig ist, daß der erste Träger (1) eine erste Reflexionsfläche (11) aufweist, derart, daß Licht vom Sender (3) an dieser ersten Reflexionsfläche (11) reflektiert wird, auf den weiteren Träger (20) trifft, diesen durchläuft und in den Lichtwellenleiter (40) eingekoppelt wird und daß der weitere Träger (20) mindestens zwei Reflexionsflächen (24, 29) an gegenüberliegenden Flächen aufweist, derart, daß Licht aus dem Lichtwellenleiter (40) an den beiden Reflexionsflächen (24, 29) reflektiert wird, bevor es auf den Empfänger (33) trifft.

2. Optische Sende- und Empfangsanordnung nach Anspruch 1, dadurch gekennzeichnet, daß der Sender (3) auf dem Boden einer Vertiefung (2) in der Fläche des ersten Trägers (1) montiert ist und die Monitordiode (8) über der Vertiefung (2) angeordnet ist, derart, daß das aus dem Laser (3) an einem Ende austretende Licht an einer geneigten Seitenfläche (7) der Vertiefung (2) reflektiert wird und auf die Monitordiode (8) trifft.

3. Optische Sende- und Empfangsanordnung nach einem der Ansprüche 1 oder 2, dadurch gekennzeichnet, daß mindestens eine der Reflexionsflächen (24, 29) im weiteren Träger (20) mit wellenlängenselektiven Filtern (26, 30) beschichtet ist, die das Empfangslicht reflektieren und Sendelicht durchlassen.

4. Optische Sende- und Empfangsanordnung nach einem der Ansprüche 1 bis 3, dadurch gekennzeichnet, daß der weitere Träger (20) auf der dem Empfänger (33) zugewandten Fläche im Strahlengang vor dem Empfänger eine Sammellinse aufweist.

5. Optische Sende- und Empfangsanordnung nach Anspruch 4, dadurch gekennzeichnet, daß die Sammellinse (32) aus dem Träger (20) durch einen Prägeprozeß oder Trockenätzen hergestellt ist.

**Claims**

1. Optical transceiver having the following components:
   an optical fibre (40), a transmitter (3), a receiver (33) and a coupling optical system (5) between the transmitter and optical fibre, the individual components being fixed on substrates (1, 20) which have reflecting surfaces (11, 24, 29) and which have V-grooves and depressions which are produced by anisotropic etching and in which the individual components are fixed, characterized in that the transmitter (3), receiver (33) and a monitor diode (8) are mounted on a surface of a first, essentially plate-shaped substrate (1), in that the optical fibre (40) is arranged perpendicular to said surface of the substrate (1), in that a further, essentially plate-shaped substrate (20) which is transparent to light of the transmitting wavelength is arranged between the optical fibre (40) and the surface of the first substrate (1), in that the first substrate (1) has a first reflecting surface (11) such that light from the transmitter (3) is reflected at said first reflecting surface (11), strikes the further substrate (20), traverses the latter and is launched into the optical fibre (40), and in that the further substrate (20) has at least two reflecting surfaces (24, 29) on opposite surfaces such that light from the optical fibre (40) is reflected at the two reflecting surfaces (24, 29) before it strikes the receiver (33).

2. Optical transceiver according to Claim 1, characterized in that the transmitter (3) is mounted on the base of a depression (2) in the surface of the first substrate (1), and the monitor diode (8) is arranged over the depression (2) in such a way that the light emerging from the laser (3) at one end is reflected at an inclined lateral surface (7) of the depression (2) and strikes the monitor diode (8).

3. Optical transceiver according to either of Claims 1 and 2, characterized in that at least one of the reflecting surfaces (24, 29) in the further substrate (20) is coated with wavelength-selective filters (26, 30) which reflect the received light and pass the transmitted light.

4. Optical transceiver according to one of Claims 1 to 3, characterized in that the further substrate (20) has a positive lens in the beam path upstream of the receiver (33) on the surface facing the receiver.

5. Optical transceiver according to Claim 4, characterized in that the positive lens (32) is produced from the substrate (20) by an embossing process or dry etching.

## Revendications

1. Système optique d'émission et de réception avec les composants suivants : un guide d'ondes lumineuses (40), un émetteur (3), un récepteur (33) et un circuit optique de couplage (5) entre l'émetteur et le guide d'ondes, les différents composants étant fixés sur des supports (1, 10) qui présentent des surfaces de réflexion (11, 24, 29) ainsi que des rainures en V et des renfoncements fabriqués par gravure anisotrope, dans lesquels sont fixés les différents composants, caractérisé en ce que

   • l'émetteur (3), le récepteur (33) et une diode de contrôle (8) sont montés sur une face d'un premier support (1) ayant sensiblement la forme d'un disque,
   • le guide d'ondes lumineuses (40) est disposé perpendiculairement à cette face du support (1),
   • entre le guide d'ondes lumineuses (40) et la face du premier support (1) on dispose un autre support (20), ayant sensiblement la forme d'un disque qui laisse passer la lumière de la longueur d'onde d'émission,
   • le premier support (1) présente une première surface de réflexion (11), de telle manière que la lumière est réfléchie par l'émetteur (3) sur cette première surface de réflexion (11), arrive sur l'autre support (20), traverse celui-ci et est introduite dans le guide d'ondes lumineuses (40), et
   • l'autre support (20) présente au moins deux surfaces de réflexion (24, 29) sur des faces opposées, de telle manière que la lumière provenant du guide d'ondes lumineuses (40) soit réfléchie sur les deux surfaces de réflexion (24, 29), avant d'arriver sur le récepteur (33).

2. Système optique d'émission et de réception, selon la revendication 1, caractérisé en ce que l'émetteur (3) est monté sur le fond d'un renfoncement (2) dans la face du premier support (1) et la diode de contrôle (8) est disposée sur le renfoncement (2), de telle manière que la lumière sortant à une extrémité du laser(3) est réfléchie sur une face inclinée latérale (7) du renfoncement (2), et tombe sur la diode de contrôle (8).

3. Système optique d'émission et de réception, selon la revendication 1 ou 2,
caractérisé en ce que
au moins l'une des surfaces de réflexion (24, 29) dans l'autre support (20) est garnie de filtres sélectifs en longueurs d'onde (26, 30), filtres (26, 36) qui réfléchissent la lumière de réception et laissent passer la lumière d'émission.

4. Système optique d'émission et de réception, selon l'une des revendications 1 à 3,
caractérisé en ce que
l'autre support (20) présente, sur la face tournée vers le récepteur (33), une lentille convergente avant le récepteur, sur le passage du rayonnement.

5. Système optique d'émission et de réception, selon la revendication 4,
caractérisé en ce que
la lentille convergente (32) est réalisée, à partir du support (20), par un procédé de matriçage ou une gravure à sec.

Fig.1

EP 0 815 479 B1

Fig.2

30 28     29   27      23

$\gamma_{3m}$

**Fig.3**

31         24     25    26

70

$\gamma_{2m}$

$\gamma_{1m}$   71

3

**Fig.4**

1